# EUROPEAN PATENT APPLICATION

(11) **EP 3 906 995 A1**
(43) Date of publication of application: **10.11.2021**
(21) Application number: 20172717.9
(22) Date of filing: 04.05.2020
(51) Int. Cl.: B01J 20/22, B01J 20/20, B01J 20/30, B01J 20/34, B01D 53/04

(54) **ADSORBENT MATERIAL ON THE BASIS OF A METAL-ORGANIC FRAMEWORK, METHOD FOR THE PRODUCTION AND USE OF THE SAME**

(71) Applicant: FRAUNHOFER-GESELLSCHAFT zur Förderung der angewandten Forschung e.V., 80686 München (DE); Centre National de la Recherche Scientifique, 75005 Paris (FR); MOF Technologies Limited, Belfast BT7 1NF (GB); Graphenea, S.A., 20009 Donostia-San Sebastian (ES); Université de Mons, 7000 Mons (BE)
(72) Inventor: HEYMANS, Nicolas, 7000 Mons (BE); DE WEIRELD, Guy, 7971 Beloeil (BE); CASABAN-JULIAN, Jose, BT7 1NF Belfast (GB); HAMILL, Conor, BT7 1NF Belfast (GB); ZHANG, Yuancheng, BT7 1NF Belfast (GB); MOORE, Ashleigh, BT7 1NF Belfast (GB); EMMERICH, Rudolf, D-76327 Pfinztal (DE); GRAF, Matthias, D-76327 Pfinztal (DE); RESS, Christian, D-76327 Pfinztal (DE); SCHÖNWALD, Markus, D-76327 Pfinztal (DE); TORIBIO, Beatriz Alonso, 20600 Eibar Gipuzkoa (ES); ZURUTUZA, Amaia, 20007 San Sebastian Gipuzkoa (ES); ORTEGA, Amaya, San Sebastian Gipuzkoa (ES); SERRE, Christian, F-78370 Plaisir (FR)
(74) Representative: Lichti - Patentanwälte Partnerschaft mbB

(57) **Abstract**

The invention relates to a method of preparing an adsorbent material on the basis of a porous metal-organic framework (MOF) being suitable for adsorbing gases, in particular carbon dioxide (CO₂), comprising the steps of
(a) providing at least one porous metal-organic framework in particulate form;
(b) providing graphene oxide (GO) in particulate form; and
(c) combining the at least one porous particulate metal-organic framework with the particulate graphene oxide to obtain the adsorbent material.

Moreover, the invention relates to an adsorbent material of the type as mentioned above as well as to the use of said adsorbent material in an adsorption process, in which the adsorbent material is exposed to a gas stream so as to adsorb a gas component of the gas stream, and in which the gas component is desorbed by heating the adsorbent material by means of exposing it to high-frequency electromagnetic radiation for regeneration.

## Description

The present invention relates to a method of preparing an adsorbent material on the basis of at least one porous metal-organic framework (MOF) being suitable for adsorbing gases, in particular carbon dioxide (CO₂). Moreover, the present invention concerns an adsorbent material being suitable for adsorbing gases, in particular carbon dioxide (CO₂), wherein the adsorbent material contains at least one porous metal-organic framework (MOF), in particular produced by a method of the type as mentioned above. Finally, the invention is directed on the use of an adsorbent material of the aforementioned type in an adsorption process.

The increasing concentration of carbon dioxide (CO₂) and other greenhouse gases, such as, e.g., methane, nitrous oxide etc., in the atmosphere makes a more and more significant contribution to the global warming. Carbon dioxide emissions are predominantly anthropogenic and derive from the combustion of fossil fuels in order to generate power and heat, but also from agriculture and other sources. Although successful attempts have been made to decrease the carbon dioxide emissions for certain sectors in the near past, such as, e.g., by at least partially replacing fuel and coal-fired power stations through wind power stations and photovoltaic generators, it will probably not succeed to considerably decrease the overall emissions of carbon dioxide worldwide merely by avoiding emissions since the global energy demand will still increase in the next future and the renewable energies are not yet sufficiently developed to completely replace fossil fuels.

For this reason, further attempts have been made to not only avoid emissions of carbon dioxide, but also to capture carbon dioxide and, where appropriate, other gases from gas streams, such as, e.g., exhaust gas streams of power production and energy intensive industry, vehicles, watercrafts etc., by means of gas-solid adsorption processes in which the respective gas component(s) is/are adsorbed on solid adsorbent materials. Examples of suitable adsorbent materials comprise porous solids, e.g., zeolites, metal-organic frameworks and the like. After having been adsorbed, the gas components including carbon dioxide are desorbed in order to regenerate the adsorbent material, whereupon the desorbed carbon dioxide can be stored in a so-called carbon dioxide capture and storage process (CSS). Desorption is conventionally predominantly realised by heating the adsorbent material (temperature swing adsorption), or by pressure changes (pressure swing adsorption). However, all of the afore-mentioned desorption processes suffer the disadvantage that they are generally time and energy consuming. In particular, temperature swing adsorption is often ineffective because of the use of an external convection source being combined with the usually poor thermal conductivity of the porous adsorbent materials.

US 4 312 641 A discloses a process for selectively adsorbing and desorbing gas components, *inter alia* carbon dioxide, on liquid or solid porous adsorbent materials, for example, molecular sieves or zeolites, alumina, silica gel, desiccants and the like. In order to desorb the adsorbed gases and to regenerate the adsorbent material, the latter is exposed to microwave radiation at a frequency of 0.03 GHz to 3000 GHz. Since the adsorbent materials themselves have a rather poor absorption capacity for microwaves, they are combined with a microwave absorbent being capable of absorbing microwave energy within the above frequency range in an amount sufficient to activate and selectively desorb the adsorbed gas components on the adsorbent material. Examples of such microwave absorbents comprise graphite, ferrite, stainless steel powders, phosphorus pentoxide, and other materials with high dielectric loss factors which are admixed with the respective adsorbent material, coated on the same or adsorbed on the same. In this manner, an intimate mixture of the adsorbent material and the microwave absorbent can be formed and then shaped into pellets of beads of an adsorber bed.

An important advantage of high-frequency electromagnetic radiation within the microwave spectra for desorbing adsorbed gases and for regenerating the porous adsorbent material consists in that microwaves heat the adsorbent material volumetrically and independently on its thermal conductivity, so that the poor thermal conductivity of porous solids being suitable as adsorbent materials for gases including carbon dioxide can be overcome.

Metal-organic frameworks (MOF) have been found particularly suitable as porous adsorbent materials for selectively adsorbing gases including carbon dioxide. Metal-organic frameworks as disclosed therein are a class of compounds comprising metal ions or clusters coordinated to organic ligands to form two-, and especially three-dimensional structures. They are a subclass of coordination polymers, with the special feature that they are porous or, in particular, microporous. Metal-organic frameworks comprise inorganic building units, i.e., the so-called secondary building units (SBU) on the one hand, and organic molecules, i.e., the so-called linkers on the other hand, wherein the latter serve as linking elements between the inorganic building units. Moreover, metal-organic frameworks are so-called coordination networks in which a coordination compound extends, through repeating coordination entities, in one dimension, but with crosslinks between two or more individual chains, loops, or spiro-links, or a coordination compound extends through repeating coordination entities in two or three dimensions. The pores or micro pores of the two-dimensional or three-dimensional structures are usually filled with guest molecules (e.g., solvents or linkers which have not reacted) subsequent to the synthesis of the metal-organic framework, but can easily be removed by applying heat, vacuum etc., so that the pores are made available for the adsorption of gases, in particular carbon dioxide, but also volatile organic compounds (VOC) including methane (CH₄), nitrogen oxide (NOₓ), sulphur oxide (SOₓ), water (H₂O), hydrogen (H₂), oxygen (O₂), and other gas species.

Accordingly, metal-organic frameworks constitute ideal adsorbent materials for gases having a rather high selectivity and adsorption capacity for carbon dioxide, fast adsorption-desorption kinetics, adequate multicycle stability and good performance in the presence of competing species. However, having regard to the thermal conductivity, metal-organic frameworks suffer the same disadvantage as the above-mentioned zeolites and it is thus difficult, if not impossible, to economically desorb the adsorbed gases thermally in order to regenerate the adsorbent material (MOF), because although the desorption kinetics of metal-organic frameworks are high, it is time and energy consuming to heat the metal-organic framework to an appropriate desorption temperature. Moreover, as metal-organic frameworks are nonpolar, they also cannot absorb high-frequency electromagnetic radiation in an extent to sufficiently be heated in order to provide for desorption of the adsorbed gases. Still a further drawback of metal-organic frameworks consists in that their mechanical stability is usually rather poor which in turn leads to the risk that particles of metal-organic frameworks can easily be damaged in an adsorber bed due to friction and weight.

WO 2012/100149 A1 discloses an adsorbent material being suitable for the adsorption of carbon dioxide in exhaust streams of internal combustion machines of cars, wherein, among others, metal-organic frameworks and zeolites are suggested as appropriate adsorbent materials. For regenerating the adsorbent material, electric heaters or microwave generators can be applied in order to supply heat and to desorb the adsorbed gases. However, as mentioned above, convective heat as well as microwave radiation has proved rather ineffective for the reasons above.

Accordingly, it is an object of the present invention to provide for an adsorbent material on the basis of porous metal-organic frameworks (MOF) as well as for a method of preparing such an adsorbent material on the basis of porous metal-organic frameworks (MOF) as defined by way of introduction which can easily and rapidly be regenerated and which also comprises a mechanical stability which makes it possible to economically use said adsorption material in industrial adsorption/desorption processes, wherein the above drawbacks are at least partially eliminated.

Still another object of the present invention consists in the use of an adsorbent material on the basis of porous metal-organic frameworks as mentioned above in which adsorption of carbon dioxide and, where appropriate, other gas components as well as desorption of said gases for the purpose of regenerating the adsorbent material can be effected easily, rapidly and commercially in a cost-effective and energy saving manner.

On the one hand, in procedural terms, this object is achieved by a method of preparing an adsorbent material on the basis of at least one porous metal-organic framework (MOF) being suitable for adsorbing gases, in particular carbon dioxide (CO₂), the method being characterised by the steps of
(a) providing at least one porous metal-organic framework in particulate form;
(b) providing graphene oxide (GO) in particulate form; and
(c) combining the at least one porous particulate metal-organic framework with the particulate graphene oxide to obtain the adsorbent material.

Moreover, the above object is achieved by an adsorbent material being suitable for adsorbing gases, in particular carbon dioxide (CO₂), wherein the adsorbent material contains at least one porous metal-organic framework (MOF), in particular produced by a method of the type as mentioned above, the adsorbent material being characterised in that the adsorbent material further contains graphene oxide being combined with the at least one metal-organic framework.

On the other hand, the above object is achieved by the use of an adsorbent material of the aforementioned type in an adsorption process, the adsorption process comprising the following steps:
- exposing the adsorbent material to a gas stream and adsorbing at least one gas component of the gas stream, in particular carbon dioxide (CO₂); and
- desorbing the at least one gas component being adsorbed on the adsorbent material by heating the adsorbent material, wherein the heating of the adsorbent material is effected by means of exposing it to high-frequency electromagnetic radiation.

Graphene oxide (GO) consists in a carbon-based two-dimensional material which conventionally can be prepared by the reaction of graphite with a strong oxidizing agent followed by an aqueous treatment. Graphene oxide consists of an extended hexagonal carbon structure according to the type of a carbon lattice comprising oxygen containing functional groups. On the one hand, the particulate graphene oxide, when combined with porous particulate metal-organic frameworks, serves as an effective absorbent for high-frequency electromagnetic radiation, such as, in particular, microwave radiation, in order to significantly increase the absorption capacity for microwaves of the adsorbent material according to the invention. In this way, a thermal desorption of adsorbed gas components for regenerating the adsorbent material according to the invention is easily possible in a time and energy saving manner by means of exposing the adsorbent material to high-frequency electromagnetic radiation, preferably within a spectra of about 0.01 GHz to about 3000 GHz, more preferably within a spectra of about 0.1 GHz and about 1000 GHz, most preferably within the microwave spectra of about 1 GHz to about 300 GHz, wherein the electromagnetic radiation accelerates the desorption process at significant lower temperatures compared to a thermal desorption by means of convective heating. Moreover, since the desorption of gases from the adsorbent material according to the invention by means of electromagnetic radiation takes place faster compared to the prior art, this in turn leads to a considerable reduction of the time required for the regeneration process of the adsorbent material (MOF/GO), because the desorption time as well as the subsequent cooling time are reduced and thus a lower energy penalty for the desorption of the adsorbed gases is achieved. It should be pointed out that the desorption step using high-frequency electromagnetic radiation does not only lead to an improved desorption of carbon dioxide (CO₂) as described above, but also of many other gases or vapours such as, e.g., volatile organic compounds (VOC) including methane (CH₄), nitrogen oxide (NOₓ), sulphur oxide (SOₓ), water (H₂O), hydrogen (H₂), oxygen (O₂), nitrogen (N₂) etc., which occur in many technical applications. Thus the adsorbed gases can be desorbed essentially completely in order to provide for a complete regeneration of the adsorbent material.

Moreover, it has surprisingly be found that particulate graphene oxide, when combined with porous particulate metal-organic frameworks, reinforces the mechanical stability of metal-organic frameworks which makes it possible to use the adsorbent material according to the invention in adsorption processes in industrial scale, in which the adsorbent material (e.g., being in the form of an adsorber bed) is exposed to a gas stream for adsorbing one or more gas components of said gas stream including, in particular, carbon dioxide, whereupon the adsorbed gas component(s) is/are desorbed by heating the adsorbent material according to the invention by means of radiating it with high-frequency electromagnetic radiation, preferably within the microwave spectra, from time to time, i.e., when required at regular or irregular time intervals. It is supposed that the two-dimensional structure of the graphene oxide being combined with the two-dimensional, or preferably predominantly three-dimensional, structure of the metal-organic framework contributes to the increased mechanical stability of the adsorbent material according to the invention compared to conventional metal-organic frameworks against abrasion as well as against breaking in an adsorber bed. Furthermore, the (micro) porosity of most metal-organic framework is not negatively affected by the addition of graphene oxide, which means that the adsorption performances of gases, such as carbon dioxide and other gases and vapors, of most metal-organic frameworks can be entirely retained for certain amounts of graphene oxide.

In a preferred embodiment, according to step (b) of the method according to the invention, graphene oxide is provided in an amount of about 1% by weight to about 30% by weight, in particular of about 2% by weight to about 20% by weight, in relation to 100% by weight of the adsorbent material. Generally speaking, the amount of graphene oxide as an absorbent for high-frequency electromagnetic radiation, such as microwaves, should be chosen according to the intended absorption capacity for high-frequency electromagnetic radiation of the adsorbent material, wherein, by varying the concentration of graphene oxide either during the manufacture of the adsorbent material according to the invention (please also see below) or through post-synthetic additions of graphene oxide to the metal-organic framework, said absorption capacity can be tailored to the dimensions of the adsorber bed.

Moreover, alternatively or in addition, the graphene oxide can preferably be provided at least partially in the form of monolayer flakes. Such monolayer graphene oxide flakes can be prepared, e.g., by means of a process as disclosed in EP 3 070 053 A1 which is hereby incorporated by reference herein.

Accordingly, having regard to the adsorbent material itself, it preferably contains graphene oxide in an amount of about 1% by weight to about 30% by weight, in particular of about 2% by weight to about 20% by weight, in relation to 100% by weight of the adsorbent material.

In a preferred embodiment, according to step (c) of the method according to the invention, the at least one metal-organic framework is intimately mixed, in particular stirred, with the graphene oxide in order to provide for a dispersion in which the graphene oxide is dispersed in the at least one metal-organic framework substantially homogenously.

Consequently, as far as the adsorbent material according to the invention is concerned, in a preferred embodiment, the graphene oxide is dispersed in the at least one metal-organic framework substantially homogenously.

Preferably, according to step (c) of the method according to the invention, the at least one metal-organic framework and graphene oxide are dispersed in an aqueous media and are mixed with each other, whereupon the mixture of the at least one metal-organic framework and graphene oxide is dried.

Advantageously, the surfaces of the metal-organic framework and of the graphene oxide, respectively, are oppositely electrically charged in order to provide for an electrostatic attraction between the metal-organic framework and the graphene oxide. This in turn leads to a stronger affinity between the metal-organic framework and the graphene oxide and thus an even more homogenous adsorbent material can be achieved compared to pure mixing of the particulate metal-organic framework with the particulate graphene oxide. An oppositely electrically charge of the surfaces of the metal-organic framework and of the graphene oxide, respectively, preferably can be achieved by adjusting the pH value of the aqueous media, wherein, e.g., the pH value of the aqueous media could be adjusted within the acid range for many kinds of metal-organic frameworks, for example between about 1 and about 5. However, it should be pointed out that the pH value to be adjusted depends on the respective metal-organic framework and thus does not necessarily need to fall within the above pH range.

In a further preferred embodiment of the method according to the invention,
- according to step (a), at least one precursor is provided for the at least one metal-organic framework; and
- according to step (c), the precursors of the at least one metal-organic framework are mixed with the graphene oxide, wherein the at least one metal-organic framework is *in situ* synthesized from the at least one precursor in the presence of the graphene oxide.

Examples of suitable precursors comprise, *inter alia*, metal oxides and ligand molecules as known from the prior art as such. In this way it is possible, for example, to provide for an *in situ* synthesis of an adsorbent material according to the invention by chemical vapour deposition (CVD), wherein a metal oxide precursor is provided and layers thereof are deposited, whereupon these precursor layers are exposed to sublimed ligand molecule, that induce a phase transformation to the metal-organic framework. Moreover, it is of course also possible to *in situ* synthesize the metal-organic framework in the presence of graphene oxide from the at least one precursor by processes known as such, e.g., by means of hydrothermal or solvothermal methods, where crystals of the metal-organic framework are slowly grown from a hot solution. In this manner, a particularly high adsorption capability of the adsorbent material according to the invention for carbon dioxide can be obtained.

Preferably, coordination bonds can be formed between some of the metal ions and/or of the metal ion clusters of the at least one metal-organic framework and some oxygen groups of the graphene oxide, which is deemed to enhance the absorption capacity of the adsorbent material for high-frequency electromagnetic radiation and thus might contribute to a time and energy saving regeneration of the adsorbent material by exposing it to microwaves.

Furthermore, as already indicated, although generally predominantly two-dimensional porous metal-organic frameworks can be applied, the at least one metal-organic framework is preferably selected from the group comprising a three-dimensional porous structure, wherein the wording "selected from the group comprising a three-dimensional pore structure" also refers to an *in situ* synthesis of a metal-organic framework having a three-dimensional porous structure as described above within the scope of the present disclosure.

Accordingly, having regard to the adsorbent material itself, it preferably comprises a predominantly three-dimensional porous structure, wherein the pores themselves can be arranged, e.g., in the form of channels or cages of the like, and the pore system can be of a predominantly one-dimensional, two-dimensional and/or three-dimensional nature.

According to a further development of the method according to the invention, it is possible that, subsequently to step (c), a further amount of the at least one metal-organic framework or of the graphene oxide is mixed with the adsorbent material, preferably substantially homogenously, in order to modify its absorption capacity for high-frequency electromagnetic radiation, in particular within the microwave spectrum. In this manner, the absorption capacity of the absorbent material for high-frequency electromagnetic radiation can be increased by increasing the amount of graphene oxide, or, if need be, the absorption capacity of the absorbent material for high-frequency electromagnetic radiation can be decreased by increasing the amount of metal-organic framework. Accordingly, the absorption capacity of the adsorbent material for high-frequency electromagnetic radiation can be tuned, on the one hand, during the synthesis thereof, e.g., by adjusting the graphene oxide content relative to the content of the metal-organic framework or its precursors, respectively, and on the other hand, by subsequently adding some pure metal-organic framework (if the permittivity of the adsorbent material is too high) or some pure graphene oxide (if the permittivity of the adsorbent material is too low) to the adsorber material in order to adapt it to the respective field of application.

The research studies which have led to the present invention have been funded by the European Union.

## Claims

1. A method of preparing an adsorbent material on the basis of at least one porous metal-organic framework (MOF) being suitable for adsorbing gases, in particular carbon dioxide (CO₂), comprising the steps of
(a) providing at least one porous metal-organic framework in particulate form;
(b) providing graphene oxide (GO) in particulate form; and
(c) combining the at least one porous particulate metal-organic framework with the particulate graphene oxide to obtain the adsorbent material.

2. The method according to claim 1, **characterised in that**, according to step (b), graphene oxide is provided
- in an amount of 1% by weight to 30% by weight, in particular of 2% by weight to 20% by weight, in relation to 100% by weight of the adsorbent material; and/or
- in the form of monolayer flakes.

3. The method according to claim 1 or 2, **characterised in that**, according to step (c), the at least one metal-organic framework is intimately mixed, in particular stirred, with the graphene oxide.

4. The method according to any one of claims 1 to 3, **characterised in that**, according to step (c), the at least one metal-organic framework and graphene oxide are dispersed in an aqueous media and are mixed with each other, whereupon the mixture of the at least one metal-organic framework and graphene oxide is dried.

5. The method according to claim 4, wherein the surfaces of the metal-organic framework and of the graphene oxide, respectively, are oppositely electrically charged, in particular by adjusting the pH value of the aqueous media.

6. The method according to any one of claims 1 to 3, **characterised in that**,
- according to step (a), at least one precursor is provided for the at least one metal-organic framework; and
- according to step (c), the precursors of the at least one metal-organic framework are mixed with the graphene oxide, wherein the at least one metal-organic framework is *in situ* synthesized from the at least one precursor in the presence of the graphene oxide.

7. The method according to claim 6, **characterised in that** coordination bonds are formed between some of the metal ions and/or of the metal ion clusters of the at least one metal-organic framework and some oxygen groups of the graphene oxide.

8. The method according to any one of claims 1 to 7, **characterised in that** the at least one metal-organic framework is selected from the group comprising a three-dimensional porous structure.

9. The method according to any one of claims 1 to 8, **characterised in that**, subsequently to step (c), a further amount of the at least one metal-organic framework or of the graphene oxide is mixed with the adsorbent material in order to modify its absorption capacity for high-frequency electromagnetic radiation, in particular within the microwave spectrum.

10. An adsorbent material being suitable for adsorbing gases, in particular carbon dioxide (CO₂), wherein the adsorbent material contains at least one porous metal-organic framework (MOF), in particular produced by a method according to any one of claims 1 to 9, **characterised in that** the adsorbent material further contains graphene oxide being combined with the at least one metal-organic framework.

11. The adsorbent material according to claim 10, **characterised in that** it contains graphene oxide in an amount of 1% by weight to 30% by weight, in particular of 2% by weight to 20% by weight, in relation to 100% by weight of the adsorbent material.

12. The adsorbent material according to claim 10 or 11, **characterised in that** the graphene oxide is dispersed in the at least one metal-organic framework substantially homogenously.

13. The adsorbent material according to any one of claims 10 to 12, **characterised in that** the at least one metal-organic framework comprises a three-dimensional porous structure.

14. A use of an adsorbent material according to any one of claims 9 to 12 in an adsorption process, comprising the following steps:
- exposing the adsorbent material to a gas stream and adsorbing at least one gas component of the gas stream, in particular carbon dioxide (CO₂); and
- desorbing the at least one gas component being adsorbed on the adsorbent material by heating the adsorbent material, wherein the heating of the adsorbent material is effected by means of exposing it to high-frequency electromagnetic radiation.

15. The use of the adsorbent material according to claim 14, **characterised in that**, in the desorption step, the heating of the adsorbent material is effected by means of exposing it to high-frequency electromagnetic radiation within the microwave spectrum.
